# EUROPEAN PATENT APPLICATION

(11) **EP 4 617 855 A1**
(43) Date of publication of application: **17.09.2025**
(21) Application number: 24162530.0
(22) Date of filing: 11.03.2024
(51) Int. Cl.: G06F 8/30, G05B 19/042, G06N 5/04

(54) **AUTOMATIC CONTROL CODE GENERATION FOR INDUSTRIAL ASSETS**

(71) Applicant: ABB SCHWEIZ AG, 5400 Baden (CH)
(72) Inventor: TAN, Ruomu, 68163 Mannheim (DE); SCHOCH, Nicolai, 69120 Heidelberg (DE); BORRISON, Reuben, 68782 Brühl (DE); KOZIOLEK, Heiko, 76227 Karlsruhe (DE); SHEEL, Divya, 560048 Bangalore (IN)
(74) Representative: Maiwald GmbH

(57) **Abstract**

A computer-implemented method (100) for generating control code (3) for actuating an asset (2) in an industrial plant (1) to perform a given task (4), comprising the steps of:
• obtaining (110), from an automatic code generator (5), based at least in part on the given task (4), candidate control code (3a);
• performing (120) code validation on the candidate control code (3a), said code validation being configured to determine whether the candidate control code (3a) is capable of being executed, and/or capable of being compiled for execution;
• after successful code validation, determining (130) whether execution of the candidate control code (3a) is capable of actuating the asset (2) to perform the given task (4) by executing the candidate control code (3a) in a simulation environment (6); and
• if this determination is positive, determining (140) the candidate control code (3a) as the sought control code (3).

## Description

### FIELD OF THE INVENTION

The invention relates to the creation, in the engineering phase of an industrial plant, of control code for industrial assets in the industrial plant.

### BACKGROUND

Industrial assets in industrial plants usually cannot fulfil their given assigned task in the plant out-of-the-box. Rather, such assets are controlled by embedded systems or other computers. These computers need appropriate control code to make the asset perform its given task.

Nowadays, in the engineering phase of automation systems for industrial processes, control code is created by control engineers primarily in a manual manner. This procedure requires substantial knowledge of control theory, production processes, programming, validation and simulation. Moreover, before control code can be deployed, it needs to be validated and tested thoroughly and adapted such that it implements the desired functionality. Therefore, the engineering phase of automation systems requires significant manual efforts from control engineers.

### OBJECTIVE OF THE INVENTION

It is therefore an objective of the present invention to provide a method for at least partially automating the generation of control code, thereby reducing the time and effort for the engineering phase of the industrial plant.

This objective is achieved by a computer-implemented method according to the independent claim. Further advantageous embodiment are detailed in the dependent claims.

### DISCLOSURE OF THE INVENTION

The invention provides a computer-implemented method for generating control code for actuating an asset in an industrial plant to perform a given task.

In the course of this method, candidate control code is obtained from an automatic code generator based at least in part on the given task. That is, the code generator can be of any type, so long as its output is at least somehow steered by the given task.

Code validation is then performed on the candidate control code. This code validation is configured to determine whether the candidate control code is capable of being executed, and/or capable of being compiled for execution. If this is not the case (i.e., code validation unsuccessful), code generation may be repeated.

In particular, code validation may validate the generated control code for various aspects, including compilation, static code analysis, and symbolic execution. A possible implementation of this code validation is via the Langchain framework and its capability for tool integration.

If code validation is successful, it is then determined whether execution of the candidate control code is capable of actuating the asset to perform the given task. To this end, the candidate control code is executed in a simulation environment. If the candidate control code is written in an interpreter language, it may be executed directly using an appropriate interpreter. If the candidate control code is written in a compiler language, it may be compiled into object code by a compiler, and the object code may then be executed on a hardware platform. Wherever the distinction between an interpreter language and a compiler language is not important, in the following, it will just be mentioned that the candidate control code is executed, regardless of whether it needs to be compiled first.

If this determination is positive (that is, the code is capable of actuating the asset to perform the given task), the candidate control code is determined as the sought control code. That is, it is determined that the candidate control code is working properly and achieves the given task, so that it may be used as control code during normal operation of the industrial plant after the engineering phase. If the determination is negative (that is, the code is not yet capable of actuating the asset to fully perform the given task), then code generation may be repeated.

In this manner, generation of control code, which was previously a mainly manual and onerous task, can be automated using just an automated code generator of any form, means for performing code validation, and means for executing the candidate control code in a simulation environment. Depending on how sophisticated the automatic code generator is, the first generated candidate control code may be mostly viable to run at all, with only some minor issues remaining to be resolved. Once these issues are resolved, execution of the candidate control code may reveal that it is already somewhat on target regarding the achieving of the intended task. This may then be further improved upon by repeating the code generation a few more times.

But in principle, any smartness of the automatic code generator, and any prior knowledge in there, is optional. In the limiting case, the automatic code generator may just output every possible candidate control code there is, and the automated pipeline of code validation and code execution in a simulation environment may then pick out the best candidate control code as the control code to be used during normal operation of the industrial asset.

This is in some way analogous to participating in a "sizecoding" competition in the demoscene without much manual effort. If the task is, e.g., to write code that is only 16 bytes (or even only 8 bytes) in size but still causes some appealing visual effects to be outputted on the screen, all one needs is an environment for automatically executing all possible candidates and rating the respective result that is outputted on the screen. The plethora of (in the case of 8 bytes) 2⁶⁴ possibilities may then be "sieved" by the automated pipeline that determines the code with the best result.

The end result is that the overall process of commissioning assets in an industrial plant is made faster and more economic. This overall process starts with obtaining the required assets and ends with having all assets completely functional. In between, there is the mandatory onus of obtaining the needed control code. Thus, obtaining the control code according to the proposed method is not to be regarded as mere data processing or programming as such. Rather, it is a part of the overall process of commissioning that stands equally important besides the physical mounting of the assets inside the plant and the connecting of cables to the assets. Without control code, the intended functionality of the asset is not to be had.

In a particularly advantageous embodiment, if the code validation determines that the candidate control code is not capable of being executed and/or compiled, new candidate control code is obtained from the automatic code generator based at least in part on a result of the code validation as feedback. In this manner, the generating of the new candidate control code may be targeted towards improving exactly what is presently wrong and prevents the previous candidate control code from being compiled.

Likewise, if executing the candidate control code reveals that the candidate control code is not capable of actuating the asset to perform the given task, new candidate control code is obtained from the automatic code generator based at least in part on a result of the code execution as feedback. In this manner, the generating of the new candidate control code may be targeted towards improving any issues that presently stand in the way of achieving the given task.

As discussed before, if a sufficiently sophisticated automatic code generator is used, even the first generated candidate control code can be expected to go at least some way towards being compilable/executable, and towards being capable of achieving the given task. That is, this first generated candidate control code will already be better than completely random control code. This is something that can be built on in future iterations. In a simple analogy, when playing golf, the first hit of the ball with the club will not bring the ball all the way from the tee-off point into the hole. But the ball will already cover most of the distance and clear at least some obstacles in the way, and with future strokes, the ball will continue on its journey towards the hole.

In particular, the result of the code validation may include error messages from a compiler that is used to compile the candidate control code into executable object code. Frequently, one such error message points to exactly one place in the code that needs amending. For example, if a variable is being used without having been declared before, this declaration needs to be inserted.

Likewise, results from the execution of the candidate control code in the simulation environment comprise output produced by candidate control code upon execution. If the execution happens under known conditions and with known inputs, this output can be compared to an expected output. Any discrepancies that this comparison reveals may then be used as feedback for targeting the improvement of the next iteration of candidate control code.

In particular, in the course of code validation and code execution, the system interprets error messages and other messages from the runtime environment generated during the code validation and code execution phase. The system will also consult and interact with human users to clarify the requirements, if needed. The various types of information and feedback will be incorporated to re-generate the code. Modifications can include functional corrections, performance improvements, syntactical improvements, refactorings, or alternative algorithms. The four steps, namely generation, validation, execution and modification, can be done iteratively until the code validation and code execution are successful.

Throughout the workflow, the generated code and any intermediate results, e.g., execution results and attempts to modify the generated codes may be presented, in a human-friendly way to the user. In this manner, the user, such as a control engineer, may be given an opportunity to spot anomalous constellations and feed such findings back to the automatic code generator.

In a further particularly advantageous embodiment, the automatic code generator comprises a large language model, LLM, that is configured to take a text prompt as input and repeatedly predict portions of text. An LLM is a machine learning model that has been trained on a large collection of textual inputs of all sorts. It can therefore understand textual inputs of many varieties. For example, the LLM may understand an initial text prompt of the kind, "write an IEC-61131 compatible program that sets the temperature set-point on an ABC T-25 controller to 120°C". But it may also understand, e.g., feedback of the kind, "This version of the code failed compilation with the error message that variable XYZ is undeclared. Please write code that will compile.", or "This version of the code outputted a value of 0, where a value of 10 would have been expected. Please write code that will output a correct result." This feedback may be mixed with any kind of human feedback from the control engineer. For example, the control engineer may observe that the candidate control code produced by the LLM gets progressively slower, and one possible cause for such a behavior is exhaustion of memory or other resources that are not properly freed after use.

In another advantageous embodiment, the automatic code generator may be configured to reassemble fragments of existing control code to form new candidate control code. In this manner, the prior knowledge in the form of the existing control code may be put to use. This is in some way analogous to the behaviour of a human programmer who learns a new programming language by assembling bits and pieces from example programs together until the resulting control code does what it is supposed to do.

In a further particularly advantageous embodiment, the code generation comprises replacing constant values in the candidate control code with symbolic placeholders. In the manner, the finding that the control code compiles, or delivers an expected result when being executed, is valid for more cases than for just the one represented by the constant values. That is, the use of symbolic placeholders covers any possible constant value, whereas a test with one concrete constant value might, e.g., miss that for a different constant value, execution of the candidate control code will terminate at run-time with a "division by zero" error.

In a further advantageous embodiment, executing the candidate control code in the simulation environment comprises:
- inputting, to the candidate control code, one or more test scenarios, and
- comparing one or more outputs produced by the candidate control code to expected outputs.
In this manner, the testing may be focused on coverage of the scenarios that are likely to occur during later normal operation of the asset.

In particular, a control runtime environment may be used that cyclicly executes the generated control code according to predefined inputs. If necessary, the system may also configure a simulation environment that is suitable for the execution of the generated control code. Configuring the runtime environment can mean to include further cases, loops or combinations for testing, which may be obtained by means of (1) combinatorically creating manually or automatically using a prescribed state-of-the-art algorithm, or (2) generated by generative Al.

In a further particularly advantageous embodiment, determining whether execution of the candidate control code is capable of actuating the asset comprises determining whether execution of the candidate control code is capable of achieving a given control target in which the asset is involved without triggering an alarm related to the control target and/or to the asset. For example, such a control target may comprise keeping a certain variable, such as a state variable of the asset or of the industrial process as a whole, near a given set-point value by some action. For example, to change the temperature in a reaction vessel, a heater may be turned on, or material with a different temperature may be admitted to the vessel.

For example, the method may start with an Al-empowered module (Code generation) that can understand the intention from the inputs provided by the human user in natural language (e.g., "write a control algorithm for controlling a distillation column") and generates control code accordingly. Then static analysis tools may be applied to check the generated code for grammatical and semantic errors. Another Al-empowered module (Feedback processing) may process error messages (e.g. "variable x is not defined") and other information to determine if and how the code needs to be corrected. After the static validation step, the grammatically correct code may be compiled or interpreted and then executed in a simulation environment to see if it can achieve a given control target (e.g., if the distillation column can be stabilized without triggering an alarm using the generated code). Again, the Code generation module may attempt to adapt the generated code autonomously if any error occurs in the execution stage. This can be facilitated by including error messages into the code generation prompts, or by querying the internet for possible code adaptations. Along the way, the method may report all the intermediate results from validation and execution as well as a summary of the attempts to correct, modify, and regenerate the code and corresponding reasons to the user. Any feedback from the user (e.g., "in addition to increasing the product flow of the column, the code should also make sure the impurity rate is below 1 %.") may be processed by the Feedback processing module. Once the generated code has succeeded in the execution phase and the user is satisfied, it may be exported for deployment as part of the automation system.

That is, the solution may leverage Generative Al, and combine it with code compiling and symbolic execution tools for program analysis as well as a simulation environment to automate the overall code generation workflow. The solution may first generate control code according to the textually specified requirements from human users, then validate the generated code, and execute it, if applicable, in a (further configured) simulation runtime environment. Errors and issues identified in this process are addressed by the solution and the code may be adapted to try to solve them. The solution may presents the intermediate results of code validation and execution and the attempts to modify the code for the user. In such a setting, the human effort is reduced to providing requirements and feedback in natural language, checking the intermediate results, and finally approving the generated code. By automating the workflow, the manual effort of control programming may be reduced, whilst ensuring the reliability and functionality of the generated code.

Therefore, in a further particularly advantageous embodiment, the automatic code generator is configured to prompt a control engineer for at least one decision regarding the creation of candidate control code, and/or for at least one contribution to the candidate control code. Even if the control engineer gets prompted from time to time in this manner, the presently proposed method still provides a huge relief compared with the previous situation where the creation of control code was an entirely manual process. In this respect, each and every decision about the control code that can be made automatically counts. It is therefore more economical to prompt the control engineer for a limited number of times than trying to eliminate the need for such prompting with an even more sophisticated automatic code generator.

In a further particularly advantageous embodiment, one or more instances of candidate control code that are deemed capable of actuating the asset to perform the given task after execution in the simulation environment are presented to a control engineer for approval. If this approval is given, the instance of candidate control code is determined as the sought control code. If the approval is not given, new candidate control code is obtained from the automatic code generator based at least in part on feedback of the control engineer on the candidate control code. In this manner, the feedback from the control engineer may be exploited to target the generating of new control code towards last issues that are still found wanting before the control code may be used for its intended purpose.

Exemplary reasons for disapproval by the control engineer may be that, while the candidate control code 3a does its primary job of making the asset 2 perform the given task 4, it is too slow, requires too much memory or other resources, or has a resource leak in that resources are not properly freed after use, so that repeated execution of this candidate control 3a will progressively hog all available resources.

In particular, the actuating of the asset may comprise reading, from the asset, a value of a variable that characterizes the operational state of the asset, and/or of an industrial process in which the asset is involved. For example, this action may be performed by a distributed control system, DCS, of the industrial plant for the purpose of monitoring the industrial plant and controlling it according to given objectives. Another action that is frequently needed is instructing the asset to change its operational state, and/or to exert a physical influence on an industrial process in which the asset is involved. For example, this is done by the DCS as the outcome of one or more control loops to modify the behavior of an individual asset, or of the industrial plant as a whole, according to one or more control objectives.

Examples of industrial assets for which control code may be produced according to the proposed method include a controller, a valve, a pump, a stirrer, a pressure gauge, a temperature gauge, a fill level gauge, or any other field device that is in interaction with an industrial process executed on the industrial plant. In particular, the control code may be executed on embedded controllers of field devices.

Thus, in a further particularly advantageous embodiment, the determined control code is executed on a hardware platform coupled to the asset, so as to cause the asset to perform the given task. The result of performing the given task is fed back to an operator, and/or to a distributed control system, DCS, of the industrial plant. In this manner, starting from the given asset and the given task, this given task may be performed with a minimum of work required on the side of the control engineer and/or the operator. While the final control code itself may be the permanent work result of the given task that the control engineer uses later for the commissioning of the plant, it is also possible that the control engineer or the operator is just interested in the result of performing the task that is fed back. That is, the generation of the control code may happen silently in the background, and the control engineer or operator may not even be aware that control code is being generated on-the-fly to perform the initially assigned task. The control engineer or operator may thus talk to the asset in natural language where it was previously necessary to manually write control code first.

In a further advantageous embodiment, the method further comprises: gathering intermediate results from the code validation and execution of the candidate control code, and optionally also a summary of the attempts to correct, modify and regenerate the code and corresponding reasons, in a monitoring summary for a user of the industrial plant. In this manner, the user may provide feedback that can be processed by a feedback processing module and go into a further improvement of the candidate control code in the next round of code generation. For example, feedback from the user may be of a kind, "in addition to increasing the product flow of the distillation column, the code should also make sure the impurity rate is below 1%.".

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is explained using Figures without any intention to limit the scope of the invention. The Figures show:
Figure 1: Exemplary embodiment of the method 100 for generating control code 3 for actuating an asset 2 in an industrial plant 1 to perform a given task 4;
Figure 2: Schematic illustration of the workflow from the given task 4 to the finally determined control code 3;
Figure 3: Schematic illustration of the distinction between code validation 120 and determining 130 whether candidate control code 3a can perform the given task 4.

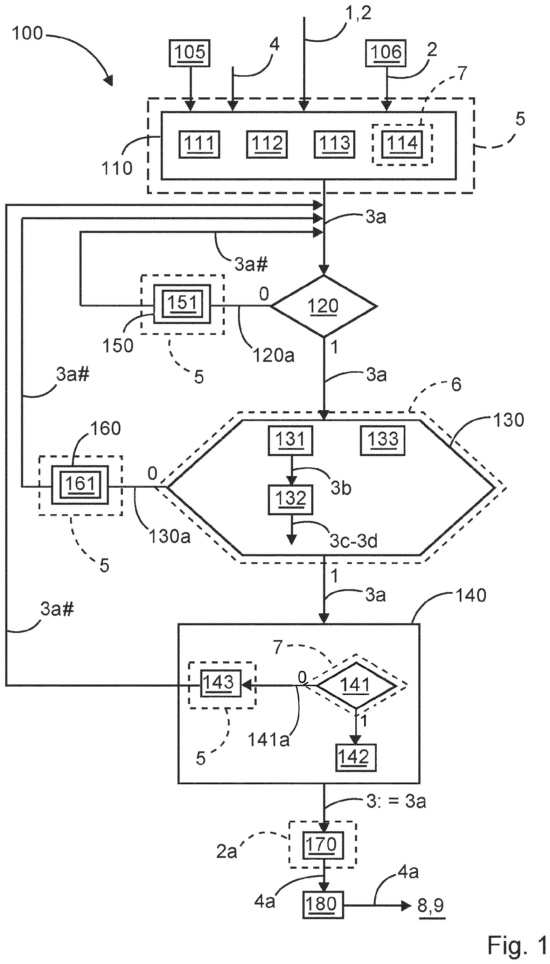

Figure 1 is a schematic flow chart of an exemplary embodiment of the method 100 for generating control code 3 for actuating an asset 2 in an industrial plant 1 to perform a given task 4. The inputs to this method are an industrial plant 1 with one or more assets 2, as well as the given task 4.

According to block 105, the actuating of the asset 2 may comprise:
- reading, from the asset 2, a value of a variable that characterizes the operational state of the asset 2, and/or of an industrial process in which the asset 2 is involved; and/or
- instructing the asset 2 to change its operational state, and/or to exert a physical influence on an industrial process in which the asset 2 is involved.

According to block 106, the asset 2 may comprise one or more of: a controller, a valve, a pump, a stirrer, a pressure gauge, a temperature gauge, a fill level gauge, or any other field device that is in interaction with an industrial process executed on the industrial plant 1.

In step 110, candidate control code 3a is obtained from an automatic code generator 5, based at least in part on the given task 4.

According to block 111, the automatic code generator 5 may comprise a large language model, LLM, that is configured to take a text prompt as input and repeatedly predict portions of text. As discussed before, an LLM is able to process the initial given task 4, as well as any feedback obtained on the candidate control code 3a, in natural language.

According to block 112, the automatic code generator 5 may be configured to reassemble fragments of existing control code 3 to form new candidate control code 3a, so as to re-use the already gained knowledge embodied in the existing control code 3, rather than starting from scratch.

According to block 113, the code generation 110 may comprise replacing constant values in the candidate control code 3a with symbolic placeholders.

According to block 114, the automatic code generator 5 may prompt a control engineer 7 for at least one decision regarding the creation of candidate control code 3a, and/or for at least one contribution to the candidate control code 3a.

In step 120, code validation is performed on the candidate control code 3a. This code validation is configured to determine whether the candidate control code 3a is capable of being executed, and/or capable of being compiled for execution.

If the code validation is not successful (truth value 0 at diamond 120), then, in step 150, new candidate control code 3a# may be obtained from the automatic code generator 5, based at least in part on a result 120a of the code validation 120 as feedback. In particular, according to block 151, the result 120a may include error messages from a compiler that is used to compile the candidate control code 3a into executable object code.

If the code validation is successful (truth value 1 at diamond 120), then, in step 130, it is determined whether execution of the candidate control code 3a is capable of actuating the asset 2 to perform the given task 4 by executing the candidate control code 3a in a simulation environment 6. That is, the truth value 1 is not to be confused with a statement that the candidate control code 3a is being executed on the actual industrial plant 1. A simulation environment 6 in a different computer and/or software platform is used for safety reasons.

To this end, according to block 131, one or more test scenarios 3b may be inputted to the candidate control code 3a. According to block 132, one or more outputs 3c produced by the candidate control code 3a may then be compared to expected outputs 3d.

According to block 133, determining whether execution of the candidate control code 3a is capable of actuating the asset may comprise determining whether execution of the candidate control code 3a is capable of achieving a given control target in which the asset 2 is involved without triggering an alarm related to the control target and/or to the asset 2.

If it is determined, by means of executing the candidate control code 3a in the simulation environment 6, that that the candidate control code 3a is not capable of actuating the asset to perform the given task 4 (truth value 0 at step 130), new candidate control code 3a# may be obtained from the automatic code generator 5, based at least in part on a result 130a of the code execution 130 as feedback. In particular, according to block 161, these results 130a may comprise output produced by candidate control code 3a upon execution.

If the candidate control code 3a is found capable of actuating the asset to perform the given task 4 (truth value 1 at step 130), then, in step 140, the candidate control code 3a is determined as the sought control code 3.

Optionally, there may be one more hurdle for the candidate control code 3a before it is determined as the sought control code 3. According to block 141, one or more instances of candidate control code 3a that are deemed capable of actuating the asset 2 to perform the given task 4 after execution in the simulation environment 6 may be presented to a control engineer 7 for approval. If this approval is given (truth value 1 at diamond 141), then, according to block 142, then the instance of candidate control code 3a may be determined as the sought control code 3. If the approval is not given (truth value 0 at diamond 141), according to block 143, new candidate control code 3a# may be obtained from the automatic code generator 5 based at least in part on feedback 141a of the control engineer 7 on the candidate control code 3a. Again, truth values 1 are not to be confused with a statement that something is being executed directly on the actual plant 1.

In the example shown in Figure 1, in step 170, the determined control code 3 is executed on a hardware platform 2a coupled to the asset 2, so as to cause the asset 2 to perform the given task 4. In step 180, the result 4a of performing the given task 4 is fed back to an operator 8, and/or to a distributed control system, DCS 9, of the industrial plant 1.

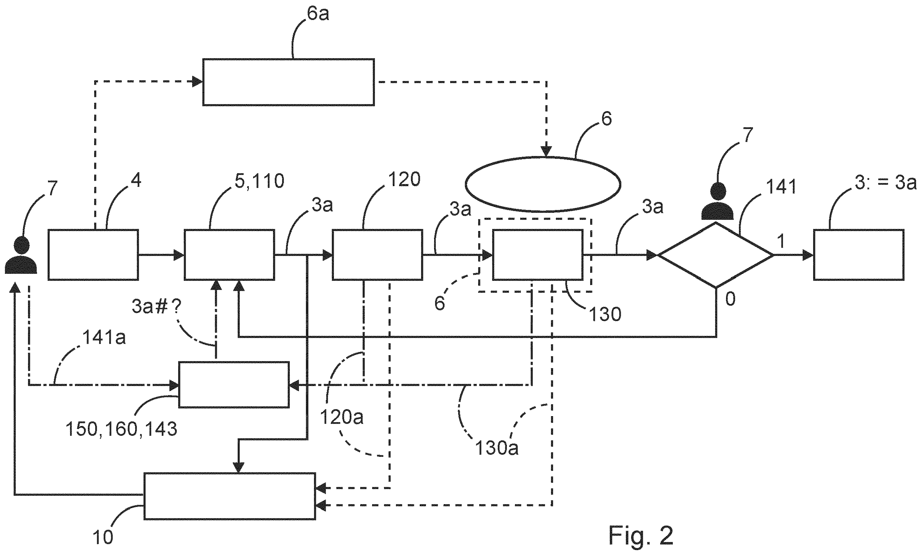

Figure 2 is a schematic illustration of the workflow from the given task 4 to the finally determined control code 3.

Initially, the control engineer 7 formulates the given task 4 as a prompt that goes into the automatic code generator 5, here: a large language model, LLM. In step 110 of the method 100, the automatic code generator 5 produces candidate control code 3a. This candidate control code 3a is validated in step 120 of the method 100. If the candidate control code 3a passes this validation, it is executed, according to step 130 of the method 100, in a simulation environment 6 that has been configured according to input 6a from the control engineer 7. If this execution 130 reveals that the candidate control code 3a is capable of making the asset 2 perform the given task 4, the candidate control code 3a is given to the control engineer 7 for approval. If the control engineer 7 grants approval (truth value 1), the candidate control code 3a is used as the final control code 3a for the asset 2.

If code validation in step 120 fails, a detailed result 120a may be delivered as feedback. Likewise, if the candidate control code 3a does not solve the given task 4, a result 130a of the code execution 130 may be delivered as feedback. Feedback 141a may also come from a control engineer 7 who disapproves the final candidate control code 3a (truth value 0 at diamond 141). All this feedback may be processed according to block 143 and steps 150 and 160 of the method 100 to request, from the automatic code generator 5, new candidate control code 3a#.

Candidate control code 3a, as well as results 120a of the code validation 120 and results 130a of the code execution 130, may be aggregated in a monitoring summary 10 that is presented to the control engineer 7 who is overseeing the commissioning of the asset 2.

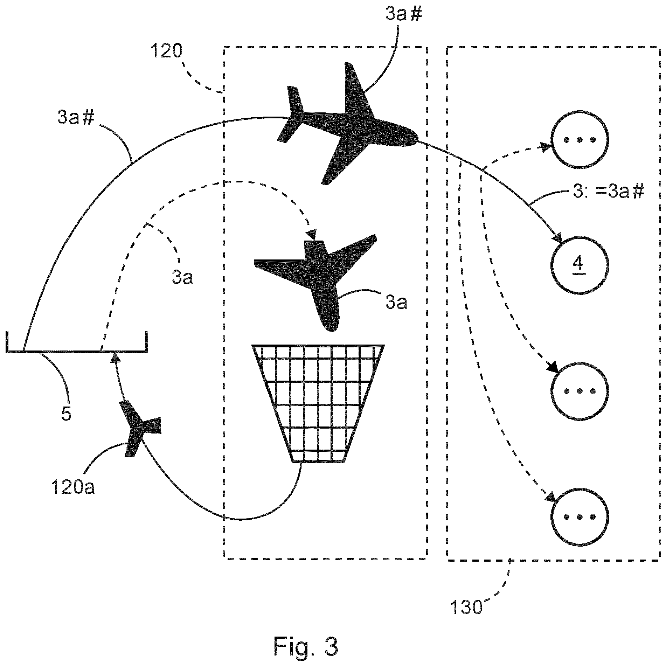

Figure 3 illustrates the distinction between code validation 120 and code execution 130 in a simple analogy. Initially, the automatic code generator 5 generates a first candidate control code 3a. This candidate control code 3a is not capable of running (here: flying) because a small but important part, the tail, is missing. In the code validation step 120, it therefore flies into the trash basket. The feedback 120a to the automatic code generator 5 is that the tail is required for the code to fly, and that it is missing.

Based on this feedback, the automatic code generator 5 generates new candidate control code 3a#. When the code validation step 120 is repeated with this new candidate control code 3a#, it turns out that this code is complete and therefore able to be executed. It may then be checked in step 130 whether this execution results in the given task 4 being solved by the asset 2. If this is the case, the new candidate control code 3a# can become the final control code 3 that is used on the asset 2.

### List of reference signs:

- 1: industrial plant
- 2: asset in industrial plant 1
- 2a: hardware platform coupled to asset 2
- 3: control code for asset 3
- 3a: candidate control code
- 3a#: new candidate control code
- 3b: test scenarios for candidate control code 3a
- 3c: actual output of candidate control code 3a
- 3d: expected output of candidate control code 3a
- 4: given task 4 to be accomplished with asset 2 and control code 3
- 4a: result of performing task 4
- 5: automatic code generator
- 6: simulation environment
- 7: control engineer of industrial plant 1
- 8: operator of industrial plant 1
- 9: distributed control system, DCS, of industrial plant 1
- 10: monitoring summary
- 100: method for determining control code 3
- 105: choosing specific actions for actuating asset 2
- 106: choosing particular assets 2
- 110: obtaining candidate control code 3a from generator 5
- 111: choosing LLM as generator 5
- 112: choosing generator 5 that reassembles code fragments
- 113: replacing constant values with symbolic placeholders
- 114: prompting control engineer 7
- 120: performing code validation on candidate control code 3a
- 120a: result of code validation 120
- 130: determining whether candidate control code 3a solves task 4
- 130a: result of code execution 130
- 131: inputting test scenarios 3b to candidate control code 3a
- 132: comparing actual outputs 3c to expected outputs 3d
- 133: determining whether given control target can be met
- 140: determining candidate control code 3a as final control code 3
- 141: presenting candidate control code 3a for approval
- 141a: feedback with disapproval of candidate control code
- 142: using candidate control code 3a as final control code 3
- 143: requesting new candidate control code 3a# with feedback 141a
- 150: requesting new candidate control code 3a# with feedback 120a
- 151: using error messages as feedback 120a
- 160: requesting new candidate control code 3a# with feedback 130a
- 161: using output of code as feedback 130a
- 170: executing determined control code 3 on hardware platform 2a
- 180: feeding back result 4a of performing task 4

## Claims

1. A computer-implemented method (100) for generating control code (3) for actuating an asset (2) in an industrial plant (1) to perform a given task (4), comprising the steps of:
• obtaining (110), from an automatic code generator (5), based at least in part on the given task (4), candidate control code (3a);
• performing (120) code validation on the candidate control code (3a), said code validation being configured to determine whether the candidate control code (3a) is capable of being executed, and/or capable of being compiled for execution;
• after successful code validation, determining (130) whether execution of the candidate control code (3a) is capable of actuating the asset (2) to perform the given task (4) by executing the candidate control code (3a) in a simulation environment (6); and
• if this determination is positive, determining (140) the candidate control code (3a) as the sought control code (3).

2. The method (100) of claim 1, further comprising:
• if the code validation (120) determines that the candidate control code (3a) is not capable of being executed and/or compiled, obtaining (150), from the automatic code generator (5), new candidate control code (3a#) based at least in part on a result (120a) of the code validation (120) as feedback; and/or
• if executing (130) the candidate control code (3a) reveals that the candidate control code (3a) is not capable of actuating the asset to perform the given task (4), obtaining (160), from the automatic code generator (5), new candidate control code (3a#) based at least in part on a result (130a) of the code execution (130) as feedback.

3. The method (100) of claim 2, wherein
• the result (120a) of the code validation (120) includes (151) error messages from a compiler that is used to compile the candidate control code (3a) into executable object code, and/or
• results (130a) from the execution (130) of the candidate control code (3a) in the simulation environment (6) comprise (161) output produced by candidate control code (3a) upon execution.

4. The method (100) of any one of claim 1 to 3, wherein the automatic code generator (5) comprises (111) a large language model, LLM, that is configured to take a text prompt as input and repeatedly predict portions of text.

5. The method (100) of any one of claims 1 to 4, wherein the automatic code generator (5) is configured (112) to reassemble fragments of existing control code (3) to form new candidate control code (3a).

6. The method of any one of claims 1 to 5, wherein the code generation (110) comprises (113) replacing constant values in the candidate control code (3a) with symbolic placeholders.

7. The method (100) of any one of claims 1 to 6, wherein executing the candidate control code (3a) in the simulation environment (6) comprises:
• inputting (131), to the candidate control code (3a), one or more test scenarios (3b), and
• comparing (132) one or more outputs (3c) produced by the candidate control code (3a) to expected outputs (3d).

8. The method (100) of any one of claims 1 to 7, wherein determining (130) whether execution of the candidate control code (3a) is capable of actuating the asset comprises determining (133) whether execution of the candidate control code (3a) is capable of achieving a given control target in which the asset (2) is involved without triggering an alarm related to the control target and/or to the asset (2).

9. The method (100) of any one of claims 1 to 8, wherein the automatic code generator (5) is configured to prompt (114) a control engineer (7) for at least one decision regarding the creation of candidate control code (3a), and/or for at least one contribution to the candidate control code (3a).

10. The method (100) of any one of claims 1 to 9, wherein
• one or more instances of candidate control code (3a) that are deemed capable of actuating the asset (2) to perform the given task (4) after execution in the simulation environment (6) are presented (141) to a control engineer (7) for approval;
• if this approval is given, the instance of candidate control code (3a) is determined (142) as the sought control code (3); and
• if the approval is not given, new candidate control code (3a#) is obtained (143) from the automatic code generator (5) based at least in part on feedback (141a) of the control engineer (7) on the candidate control code (3a).

11. The method (100) of any one of claims 1 to 10, wherein the actuating of the asset (2) comprises (105):
• reading, from the asset (2), a value of a variable that characterizes the operational state of the asset (2), and/or of an industrial process in which the asset (2) is involved; and/or
• instructing the asset (2) to change its operational state, and/or to exert a physical influence on an industrial process in which the asset (2) is involved.

12. The method (100) of any one of claims 1 to 11, wherein the asset (2) comprises (106) one or more of: a controller, a valve, a pump, a stirrer, a pressure gauge, a temperature gauge, a fill level gauge, or any other field device that is in interaction with an industrial process executed on the industrial plant (1).

13. The method (100) of any one of claims 1 to 12, further comprising:
• executing (170) the determined control code (3) on a hardware platform (2a) coupled to the asset (2), so as to cause the asset (2) to perform the given task (4); and
• feeding back (180) the result (4a) of performing the given task (4) to an operator (8), and/or to a distributed control system, DCS (9), of the industrial plant (1).

14. The method (100) of any one of claims 1 to 13, further comprising: gathering intermediate results from the code validation (120) and execution (130) of the candidate control code (3a), and optionally also a summary of the attempts to correct, modify and regenerate the code and corresponding reasons, in a monitoring summary (10) for a user of the industrial plant (1).

15. A computer program, comprising machine-readable instructions that, when executed by one or more computers and/or compute instances, cause the one or more computers and/or compute instances to perform the method (100) of any one of claims 1 to 14.

16. A non-transitory machine-readable data carrier and/or a download product with the computer program of claim 15.

17. One or more computers and/or compute instances with the computer program of claim 15, and/or with the machine-readable data carrier and/or download product of claim 16.
